# EUROPÄISCHE PATENTSCHRIFT

(11) **EP 1 868 746 B1**
(45) Veröffentlichungstag und Bekanntmachung des Hinweises auf die Patenterteilung: **06.05.2009**
(21) Anmeldenummer: 06723389.0
(22) Anmeldetag: 14.03.2006
(51) Int. Cl.: B08B 9/42, B67C 3/24, B65B 21/12, B65G 47/84, B25J 15/02

(54) **KLAMMER ZUM HALTEN VON GEFÄSSEN**
CLAMP FOR HOLDING VESSELS
BRIDE DE FIXATION POUR FIXER DES RECIPIENTS

(30) Priorität: 30.03.2005 DE 102005014838
(43) Veröffentlichungstag der Anmeldung: 26.12.2007
(73) Patentinhaber: KRONES AG, 93073 Neutraubling (DE)
(72) Erfinder: ZEPF, Georg, 93095 Hagelstadt (DE); GLÖTZL, Reiner, 93080 Pentling (DE)
(74) Vertreter: Schuster, Thomas
(86) Internationale Anmeldenummer: PCT/EP2006/002290
(87) Internationale Veröffentlichungsnummer: WO 2006/102983

(56) Entgegenhaltungen:
- EP-A- 0 743 267
- DE-A1- 19 816 239
- DE-U1- 29 915 927

## Beschreibung

Die Erfindung betrifft eine Klammer zum Halten von Gefäßen, insbesondere Flaschen, in Gefäßbehandlungs- und Transportmaschinen, mit mindestens zwei Klammerarmen, die zum Öffnen und Schließen relativ zueinander beweglich sind, wobei jeder Klammerarm einen Greifarm und mindestens ein Klammerarm einen Gegenarm aufweist.

Solche Klammern zum Halten bzw. Greifen von Gefäßen sind schon aus der EP 09 39 044 B1, der BP 07 262 16 B1 und der EP 07 43 26 7 B1 bekannt. Wirtschaftlich durchgesetzt haben sich dabei die aus der EP 09 39 044 bekannten Kammern. Eine solche Klammer umfasst zwei Metallklammerarme, die schwenkbar zueinander angeordnet sind. Gefäßseitig auf der einen Seite der Schwenkachse (n) ist dabei ein Greifbereich und auf der anderen Seite der Schwenkachse ein Betätigungsbereich zum Öffnen und Schließen der Arme ausgebildet. Im Betätigungsbereich wird dazu ein drehbarer Steuernocken benutzt. Dort wo der Steuernocken in Berührung mit den Betätigungsbereichen der Greifarme kommt, ist zusätzlich eine Blattfeder ausgebildet. Diese dient dazu, unterschiedliche Gefäßdurchmesser beim Schließen der Klammer auszugleichen und gegebenenfalls eine Greifkraft zu erzeugen. Eine Vorrichtung zum Greifen von Gefäßen ist auch aus der DE 198 16 239 A1 bekannt.

Diese Klammern haben jedoch den Nachteil, dass der Aufbau der Greifarme relativ aufwändig ist, da in jedem Greifarm die zusätzlichen Blattfedern eingebaut werden müssen, und zweitens durch das Vorhandensein dieser Blattfeder schwer zugängliche Hohlräume entstehen, die nur schwierig gereinigt und desinfiziert werden können und somit mikrobiologisch bedenklich sind.

Die in der EP 07 26 216 und BP 07 43 267 vorgeschlagene elastische Durchbiegung des gesamten Klammerarms bzw. nur des Greifarms um Gefäßdurchmessertoleranzen auszugleichen, konnte sich nicht durchsetzen, da eine exakte Zentrierung der Gefäße nicht gewährleistet werden konnte.

Es ist daher Aufgabe der vorliegenden Erfindung, eine Klammer zum Halten von Gefäßen bereitzustellen, die die nötige Zentrierung der Gefäße ermöglicht, wobei gleichzeitig Gefäßdurchmessertoleranzen ausgeglichen werden können, deren Aufbau jedoch im Vergleich zum Stand der Technik wesentlich vereinfacht ist.

Diese Aufgabe wird mit der erfindungsgemäßen Klammer nach Anspruch 1 gelöst.

Mit der erfindungsgemäßen einstückige Ausführung des Klammerarms wird Dank des formstabilen Greifarms eine exakte Zentrierung der Gefäße ermöglicht, und wird weiterhin erreicht, dass der formelastische Gegenarm, der die erforderliche Greifkraft erzeugt, Toleranzen der Gefäßdurchmesser durch Verbiegung ausgleicht.

Formstabil in diesem Zusammenhang bedeutet, dass für die vorgesehenen Belastungen, also der auftretenden Hebelkräfte beim Schließen der Klammer, eine Verformung oder Verbiegung verhindert wird. Formelastisch in diesem Zusammenhang bedeutet, dass alleine auf Grund der gewählten Form und der elastischen Eigenschaften des verwendeten Materials, eine Verformung bzw. Verbiegung ermöglicht wird, um Gefäßdurchmessertoleranzen aufnehmen zu können. Insbesondere ist bei der erfindungsgemäßen Ausführung der Klammer das Vorhandensein einer zusätzlichen Feder oder eines zusätzlichen zweiten elastischen Materials nicht mehr nötig. Dies vereinfacht den Aufbau und ermöglicht eine "glatte" Bauweise, die mikrobiologisch vorteilhaft ist, da besser reinigbar.

Vorteilhafterweise kann in der erfindungsgemäßen Klammer der Greifarm in der Bewegungsebene und parallel zur Bewegungsrichtung mindestens so breit ausgebildet sein, dass der Greifarm beim Schließen der Klammer zum Aufnehmen eines Gefäßes mit vorbestimmten Durchmesser formstabil bleibt, während der Gegenarm so dimensioniert werden kann, dass Toleranzen der Gefäßdurchmesser von bis zu 5 mm, insbesondere von bis zu 3 mm, beim Schließen durch Verbiegung des Gegenarms aufnehmbar sind. Durch die korrekte Dimensionierung, die je nach Beanspruchungsanforderungen entsprechend gewählt wird, lassen sich somit im einstückigen Klammerarm sowohl der formstabile Bereich als auch der formelastische Bereich ausbilden. Da die zur Verbiegung nötige Kraft sich zumindest näherungsweise linear zur Dicke eines Werkstückes verhält, lässt sich so entsprechend der Länge der Hebelarme der Klammer, also Greifarm und Gegenarm, leicht die korrekte Dimensionierung ermitteln. Um bei gegebenem E-Modul des Klammerarmmaterials die gewünschte Elastizität im Gegenarm zu erzielen, muss der Gegenarm nur ausreichend schmal ausgebildet sein, während beim gleichen E-Modul der Greifarm entsprechend breit ausgebildet werden muss, um die Formstabilität zu erreichen.

Vorteilhafterweise kann dabei der E-Modul des Materials des Klammerarms in einem Bereich von 8 000 MPa - 15 000 MPa, insbesondere in einem Bereich von 11 000 MPa - 13 000 MPa liegen. Klammerarme aus einem solchen Material sind insbesondere langlebig, da sie auch hohe Lastwechselbeanspruchungen, in der Getränkeindustrie bis zu 15 000 000-fachen Lastwechsel, problemlos überstehen, d. h. der formstabile Teil bleibt formstabil, während der formelastische Teil elastisch bleibt.

Gemäß einer bevorzugten Ausführungsform kann der Klammerarm aus Kunststoff, insbesondere aus faserverstärktem Kunststoff bestehen. Da im Spritzgussverfahren hergestellte Kunststoffteile wesentlich günstiger als die bisher benutzten Metallklammerarme, herstellbar sind, ergeben sich für Gefäßtransport- und -behandlungsmaschinen, die eine Vielzahl von Klammern zum Halten der Gefäße aufweisen, enorme Kostenvorteile. Vorzugsweise kann dabei der Klammerarm aus Kohle- oder Glasfaser verstärktem Polyetheretherketon (PEEK) sein. Dabei ist ein Kohle- oder Glasfaseranteil in einem Bereich von 10 - 50 %, insbesondere von 30 % besonders vorteilhaft. Mit einem solchen Faseranteil lassen sich die gewünschten Materialeigenschaften erzielen und gleichzeitig bleibt das Material leicht bearbeitbar.

Gemäß einer bevorzugten Ausführungsform können beide Klammerarme einen formelastischen Gegenarm aufweisen. Durch die symmetrische Ausbildung der Klammer braucht somit jeder Klammerarm nur die Hälfte der Gesamttoleranz des Gefäßdurchmessers aufzunehmen.

Gemäß einer Variante kann zwischen den Gegenarmen eine drehbare Nocke zum Schließen und/oder Öffnen der Klammerarme bereitgestellt werden, wobei die Gegenarme in einem Berührungsbereich mit der Nocke eine Gleiteinlage aufweisen.

Mit Hilfe dieser Gleiteinlage kann die Reibung zwischen der Nocke und dem Berührungsbereich am Gegenarm verringert werden, wodurch Reibungsschäden an den Klammerarmen vermieden werden können.

Gemäß einer bevorzugten Ausführungsform kann dabei die Nocke aus Kunststoff, insbesondere aus faserverstärktem Kunststoff oder PEEK sein und die Gleiteinlage aus Metall, insbesondere aus V2A-Stahl sein. In diesem Fall lässt sich somit auch die relativ teure Metallnocke durch eine Kunststoffnocke ersetzen.

Es ist aber auch eine Klammer ohne Gleiteinlage unter der Bereitstellung eines Metallnockens denkbar.

Bevorzugt kann die erfindungsgemäße Klammer Teil eines Neckhandling-Transportsterns für Flaschen sein. Der Einsatz ist jedoch auch an anderer Stelle einer Abfüll-, Inspektions- oder einer anderen Flaschenbehandlungsanlage und auch für andere Gefäße, wie z. B. Dosen, vorteilhaft.

Ausführungsformen des Erfindungsgegenstandes werden an Hand der Zeichnungen erläutert. Es zeigen:
- Figur 1: eine dreidimensionale Ansicht einer erfindungsgemäßen Klammer im offenen Zustand,
- Figur 2: eine Draufsicht im geschlossenen Zustand und
- Figur 3: eine zweite Ausführungsform eines Klammerarms der erfindungsgemäßen Klammer.

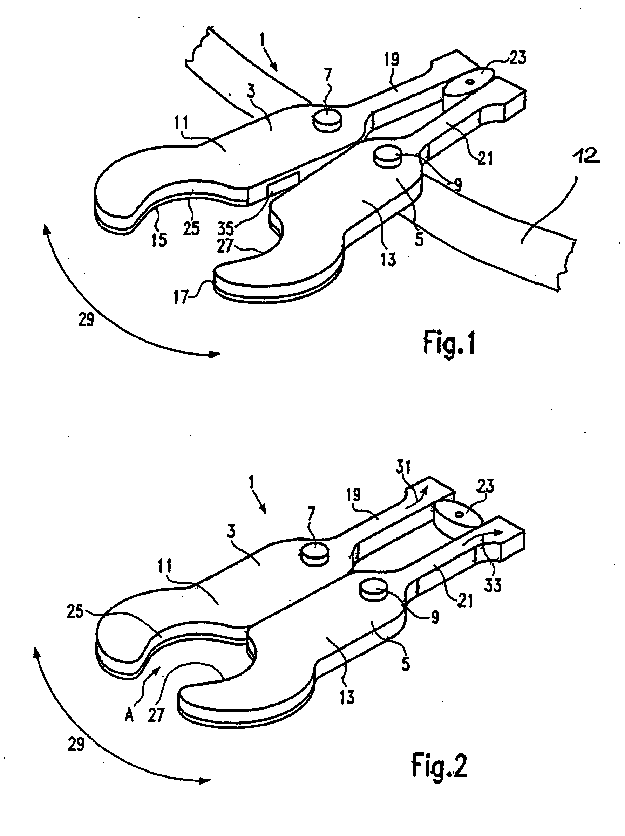

Die Figuren 1 und 2 zeigen eine Klammer 1 zum Halten von Gefäßen, insbesondere von Flaschen. Diese Klammer 1 dient üblicherweise zum Transportieren und Sortieren von Gefäßen in einem Transportstern, wie er beispielsweise im Auslauf einer Flaschenbehandlungsmaschine, wie einer Abfüll- oder Inspektionsmaschine, benutzt wird.

In Figur 1 ist ein Transportstern 12 angedeutet, auf dem die Klammer 1 mittels der Bolzen 7,9 drehbar befestigt ist. Der Transportstern ist vorzugsweise aus nicht rostendem Stahl gebildet, wobei auch andere Materialien denkbar sind. Die Befestigung der Klammer 1 ist ausdrücklich nicht auf Transportsterne beschränkt. Vielmehr ist eine Befestigung auch an Ketten, Bändern oder anderen Transportmitteln möglich.

In dieser ersten Ausführungsform umfasst die Klammer 1 zwei spiegelbildliche Klammerarme 3 und 5. Die Klammerarme 3 und 5 sind jeweils auf einem Bolzen 7 und 9 drehbar gelagert. Jeder einstückige Klammerarm 3, 5 hat einen Greifarm 11 bzw. 13, dessen Ende jeweils bogenförmig ausgebildet ist, um Gefäße über einen vorbestimmten Windelbereich umgreifen zu können. Um beispielsweise Flaschen am Hals greifen zu können, sind in dieser Ausführungsform bogenförmig Auflagerflächen 15, 17 ausgebildet. Je nach Form des Gefäßes ist dieser Abschnitt des Greifarms 11, 13 jedoch entsprechend ausgebildet. Ausgehend von den Bolzen 7 bzw. 9 weist jeder Klammerarm 3, 5 dem Greifarm gegenüberliegend einen Gegenarm 19 bzw. 21 auf.

Zwischen den Gegenarmen 19 und 21 ist an deren von den Bolzen aus gesehenen entfernten Ende ein ovaler Nocken 23 vorgesehen. Dieser Nocken 23 ist auf einer drehbaren Welle (nicht gezeigt), die im Wesentlichen parallel zu den Bolzen 7, 9 verläuft, angeordnet und dient dazu die Greifarme 3 und 5 um die ortsfesten Bolzen 7, 9 zu drehen.

In der in Figur 1 dargestellten Situation befindet sich die Klammer 1 im offenen Zustand. Figur 2 zeigt die gleiche Klammer 1 in geschlossenem Zustand. Hier wurde der Nocken 23 um 90° dreht, wodurch sich die Greifarme 3, 5 um die Bolzen 7, 9 drehen und die Greifarme 11, 13 schließen. Im geschlossenen Zustand ist die von den Greifarmen 11, 13 umschlossene Fläche A so groß, dass die für die Klammer 1 vorgesehenen Gefäße (nicht gezeigt) gegriffen und gehalten werden können, bei PET-Flaschen vorzugsweise unterhalb oder oberhalb eines Tragrings (Neckhandling).

Auf Grund von Herstellungstoleranzen weisen die Gefäße jedoch üblicherweise leicht unterschiedliche Gefäßdurchmesser auf. Bei Flaschenhälsen liegen diese üblicherweise in einem Bereich von bis zu 5 mm, insbesondere 3 mm. Dies bedeutet, dass wenn von der Klammer 1 ein Gefäß mit einem größeren Durchmesser gegriffen wird, der Greifbereich 25, 27 der Greifarme 11, 13 das Gefäß schon fest umschließt, bevor der Nocken 23 seine in Figur 2 dargestellte Endposition erreicht. Dreht der Nocken 23 nun weiter bis in seine Endposition, kommt es zum sogenannten Überdrücken. Erfindungsgemäß werden die dabei auftretenden (Drück-)Kräfte durch die Gegenarme 19, 21 absorbiert, da sie formelastisch ausgebildet sind. Da die Gegenarme 19, 21 in der Bewegungsebene der Klammerarme 3, 5 insbesondere in Richtung der Bewegung 29 relativ dünn ausgebildet sind, werden beim Überdrücken die entstehenden Kräfte durch Verbiegung der Gegenarme 19, 21 absorbiert. Eine solche verbiegung ist in Figur 2 anhand der Pfeile 31, 33 angedeutet, diese zeigen die Richtung, in die die Gegenarme 19, 21 verbogen werden. Im Gegensatz dazu sind die Greifarme 11, 13 jedoch formstabil, d. h. sie werden durch die bei der Überdrückung auftretenden Kräfte in ihrer Form nicht verändert. Dies wird gemäß dem gezeigten ersten Ausführungsbeispiel dadurch erzielt, dass die Greifarme 11, 13 zumindest im Bereich zwischen den Bolzen 7, 9 und dem Greifbereich 25, 27, in der Bewegungsebene, insbesondere in Richtung der Bewegung 29 ausreichend breit ausgebildet sind.

Durch die spezielle Form der Gegenarme sowie der Greifarme des einstückigen Klammerarms wird ermöglicht, dass im Greifbereich eine exakte Zentrierung der Gefäße, die Gefäßdurchmessertoleranzen aufweisen können, ermöglicht wird, während gleichzeitig der elastische Gegenarm so ausgebildet ist, dass die erforderliche Greifkraft erzeugt werden kann und im Falle von Gefäßdurchmessertoleranzen die auftretenden Überdrückkräfte durch Verbiegung des Gegenarms aufgefangen werden.

Als für diese Anwendung brauchbar haben sich Materialien erwiesen, deren E-Modul in einem Bereich von 8 000 MPa - 15 000 MPa, insbesondere in einem Bereich von 11 000 MPa - 13 000 MPa liegt. Die nötige Steifigkeit bei gleichzeitiger Möglichkeit der Ausbildung eines biegbaren Teils lässt sich mit Kunststoffen, insbesondere mit kohle- oder glasfaserverstärkten Kunststoffen, wie beispielsweise Polyetheretherketon (PEEK) mit 10% - 50% Anteil an Kohle- oder Glasfasern, insbesondere 30% Anteil an Fasern, ermöglichen. Somit lassen sich die üblicherweise benutzten Metallklammerarme durch kostengünstigere Kunststoffarme ersetzen, wobei jedoch die erfindungsgemäße Klammer auch weiterhin mit metallischen Werkstoffen realisiert werden kann.

Die gezeigte Ausführungsform stellt nur eine Möglichkeit der Realisierung dar. Denkbar ist es auch die beiden Klammerarme 3 und 5 scherenartig auszubilden, so dass anstatt der zwei Bolzen 7, 9 nur noch ein Bolzen benötigt wird, da sich die Klammerame 3,5 bei einer scherenartigen Konstruktion im Bolzenbereich überqueren. Denkbar ist es auch eine Klammer auszubilden, bei der nur ein Klammerarm den Gegenarm aufweist. In diesem Fall muss dieser Gegenarm so ausgebildet sein, dass er die Gesamttoleranz bezüglich der Gefäßdurchmesser aufnehmen kann. Dabei sind entweder weiterhin beide Greifarme beweglich, oder aber nur der Klammerarm mit Greifarm und Gegenarm beweglich ausgestaltet.

Zum Öffnen der erfindungsgemäßen Klammer 1 kann in herkömmlicher weise eine Druckfeder zwischen den Greifarmen 11, 13, eine Zugfeder zwischen den Gegenarmen 19, 21, eine Kulissensteuerung oder aber ein Paar abstoßende Magnete (in Figur 1 Bezugszeichen 35) in den Greifarmen 11,13 bzw. ein Paar anziehende Magnete in den Gegenarmen 19, 21 dienen. Bei der Ausführung mit den Magneten ist insbesondere vorteilhaft, dass durch das Einlassen der Magnete in die Klammerarme 3, 5 eine glatte Bauweise ermöglicht wird. Dies ist insbesondere beim Reinigen vorteilhaft, da im Gegensatz zum Benutzen von Federn keine zusätzlichen Hohlräume, die schwer zu reinigen sind, auftreten.

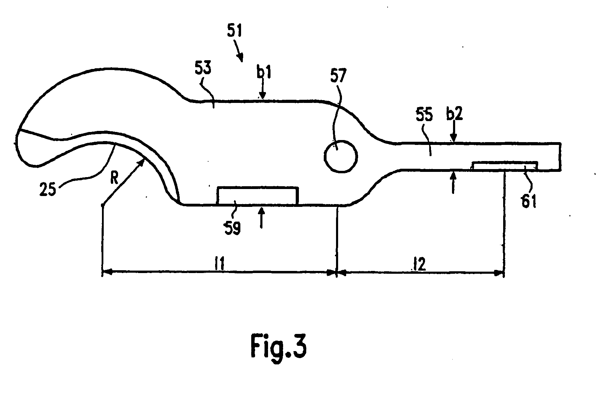

Figur 3 zeigt eine zweite Ausführungsform eines Klammerarms 51, der in einer erfindungsgemäßen Klammer 1 anstatt der Klammerarme 3, 5 eingesetzt werden kann. Der Klammerarm 51 ist im Wesentlichen baugleich mit den Klammerarmen 3 bzw. 5, (das spiegelsymmetrische Gegenstück) und umfasst demgemäss einen breiten Greifarm 53, und einen schmäleren Gegenarm 55, wobei diese die gleichen Merkmale aufweisen wie der Greifarm 11 und der Gegenarm 19 der ersten Ausführungsform. Weiterhin hat der Klammerarm eine öffnung 57 in einem zentralen Bereich zwischen Greifarm 53 und Gegenarm 55 zum Aufnehmen des Bolzens 7. Ebenso erkenntlich ist der Magnet 59, der wie Magnet 35 zum Öffnen der Klammer 1 dient. Der Einsatz von Federn ist jedoch auch hier denkbar.

Zusätzlich weist der Klammerarm 51 der zweiten Ausführungsform im von Bölzendurchtrittsloch 57 entfernten Bereich des Gegenarms 55 eine Gleiteinlage 61 auf. Diese Gleiteinlage 61 liegt im Berührungsbereich des Gegenarms 55 mit der Nocke 23 (nicht gezeigt) und dient dazu, Schädigungen des Gegenarms 55 durch Reibung mit der Nocke 23 zu verhindern. Insbesondere ist dieser Gleitbereich aus Stahl, beispielsweise V2A-Stahl, während der Klammerarm 51 aus faserverstärktem Kohlenstoff, insbesondere kohle- oder glasfaserverstärktem PEEK besteht. In diesem Falle lässt sich auch die Nocke 23 aus Kunststoff, insbesondere aus kohle- oder glasfaserverstärktem PEEK herstellen.

Als für die Anwendung zum Greifen von Flaschenhälsen, hat sich eine erfindungsgemäße Klammer gemäß der dargestellten Ausführungsformen aus PEEK mit 30% Kohlefaseranteil (PEEK CA30) mit den folgenden Dimensionen als brauchbar erwiesen. Ausgehend vom Mittelpunkt des Kreisbogens mit Radius R des Greifbereichs 25, hat der Greifarm 53 eine Länge 11 in einem Bereich von ungefähr 4 - 6 Zentimetern und der Gegenarm 55 ausgehend vom Bolzendurchtrittsloch 57 bis zur Mitte der Gleiteinlage 61 bzw. bis zum Berührungsbereich mit der Nocke 27 eine Länge von 12 in einem Bereich von ca. 4 - 6 Zentimeter. Um die Formstabilität zu ermöglichen, liegt die Breite b1 des Greifarms 53 in einem Abschnitt zwischen dem Bolzendurchtrittsloch 57 und dem Aufnahmebereich 25, 27 in einem Bereich von 1,5 - 2,5 cm, insbesondere 2 cm, und die Breite b2 des Gegenarms 55 in einem Bereich von 0,4 - 0,8 cm. Hierbei liegt die Dicke des Materials im Bereich von 0,7 - 1,2 cm. Zum Greifen von Standardflaschen ist der Radius R ungefähr gleich 1,5 cm.

Die erfindungsgemäßen Ausführungsformen zum Greifen von Gefäßen, insbesondere Flaschen, ermöglichen es, bei einfachem Aufbau, die Gefäße mit den Greifarmen exakt zentriert zu greifen, während im Gegenarm Toleranzen im Gefäßdurchmesser absorbiert werden können, wobei gleichzeitig die Klammer kostengünstiger hergestellt werden kann, da vorzugsweise anstatt von Metall ein Kunststoff benutzt wird. Weiterhin kann durch die glatte Bauweise ohne zusätzliche Federn die Klammer einfacher und besser gereinigt werden.

## Patentansprüche

1. Klammer zum Halten von Gefäßen, insbesondere Flaschen, in Gefäßtransport- und -behandlungsmaschinen, mit mindestens zwei Klammerarmen (3, 5, 51), die zum Öffnen und Schließen relativ zueinander beweglich sind, wobei jeder Klammerarm (3, 5, 51) einen Greifarm (11, 13, 53) und mindestens ein Klammerarm (3, 5, 51) einen Gegenarm (19, 21, 55) aufweist **dadurch gekennzeichnet, dass** der Klammerarm (3, 5, 51) mit Greifarm (11, 13, 53) und Gegenarm (19, 21, 55) einstückig ausgebildet ist, wobei der Greifarm (11, 13, 53) formstabil und der Gegenarm (19, 21, 55) formelastisch ausgebildet ist.

2. Klammer nach Anspruch 1, wobei der Greifarm (11, 13, 53) in der Bewegungsebene und parallel zur Bewegungsrichtung (29) mindestens so breit ausgebildet ist, dass der Greifarm (11, 13, 53) beim Schließen der Klammer zum Aufnehmen eines Gefäßes mit vorbestimmten Durchmesser formstabil bleibt, während der Gegenarm (19, 21, 55) so dimensioniert ist, dass Toleranzen der Gefäßdurchmesser von bis zu 5 mm, insbesondere von bis zu 3mm, beim Schließen durch Verbiegung des Gegenarms (19, 21, 55) aufnehmbar sind.

3. Klammer nach einem der Ansprüche 1 oder 2, wobei der E-Modul des Materials des Klammerarms (3, 5, 51) in einem Bereich von 8000 MPa bis 15000 MPa, insbesondere in einem Bereich von 11000 MPa bis 13000 MPa, liegt.

4. Klammer nach einem der Ansprüche 1 bis 3, wobei der Klammerarm (3, 5, 51) aus Kunststoff, insbesondere aus faserverstärktem Kunststoff, ist.

5. Klammer nach Anspruch 4, wobei der Klammerarm (3, 5, 51) aus kohle- oder glasfaserverstärktem Polyetheretherketon (PEEK) ist.

6. Klammer nach Anspruch 5, wobei der Kohle- bzw. Glasfaseranteil in einem Bereich von 10% bis 50% liegt, insbesondere 30% beträgt.

7. Klammer nach einem der Ansprüche 1 bis 6 , wobei beide Klammerarme (3, 5, 51) einen formelastischen Gegenarm (19, 21, 55) aufweisen.

8. Klammerarm nach Anspruch 7, mit einer zwischen den Gegenarmen (19, 21, 55) angeordneten drehbaren Nocke (23) zum Schließen und/oder öffnen der Klammerarme (3, 5, 51), wobei die Gegenarme (19, 21, 55) in einem Berührungsbereich mit der Nocke (23) eine Gleiteinlage (61) aufweisen.

9. Klammerarm nach Anspruch 8, wobei die Nocke (23) aus Kunststoff, insbesondere aus faserverstärktem Kunststoff oder PEEK, ist und die Gleiteinlage (61) aus Metall, insbesondere aus V2A Stahl, ist.

10. Klammerarm nach Anspruch 5, mit einer zwischen den Gegenarmen (19, 21, 55) angeordneten drehbaren Nocke (23) zum Schließen und/oder Öffnen der Klammerarme (3, 5, 51), wobei die Nocke (23) aus Metall, insbesondere aus V2A Stahl, ist.

## Claims

1. Clamp for holding vessels, in particular bottles, in vessel transporting and handling machines, comprising at least two clamp arms (3, 5, 51) which can be moved relative to one another for opening and closing, wherein each clamp arm (3, 5, 51) has a gripping arm (11, 13, 53) and at least one clamp arm (3, 5, 51) has a counter arm (19, 21, 55), **characterized in that** the clamp arm (3, 5, 51) with the gripping arm (11, 13, 53) and counter arm (19, 21, 55) is integrally formed, wherein the gripping arm (11, 13, 53) is dimensionally stable and the counter arm (19, 21, 55) is dimensionally elastic.

2. Clamp according to Claim 1, wherein the gripping arm (11, 13, 53) is wide enough in the plane of movement and parallel to the direction of movement (29) at least for the gripping arm (11, 13, 53) to remain dimensionally stable when the clamp is closed to receive a vessel with a predetermined diameter, whereas the counter arm (19, 21, 55) is dimensioned such that tolerances of the vessel diameters of up to 5 mm, in particular of up to 3 mm, can be accepted during closing by bending of the counter arm (19, 21, 55).

3. Clamp according to either of Claims 1 and 2, wherein the modulus of elasticity of the material of the clamp arm (3, 5, 51) is in a range from 8000 MPa to 15,000 MPa, in particular in a range from 11,000 MPa to 13,000 MPa.

4. Clamp according to one of Claims 1 to 3, wherein the clamp arm (3, 5, 51) is made of plastic, in particular of fibre-reinforced plastic.

5. Clamp according to Claim 4, wherein the clamp arm (3, 5, 51) is made of carbon-fibre-reinforced or glass-fibre-reinforced polyether ether ketone (PEEK).

6. Clamp according to Claim 5, wherein the carbon-fibre content or glass-fibre content is in a range from 10% to 50%, in particular is 30%.

7. Clamp according to one of Claims 1 to 6, wherein both clamp arms (3, 5, 51) have a dimensionally elastic counter arm (19, 21, 55).

8. Clamp arm according to Claim 7, comprising a rotatable cam (23) which is arranged between the counter arms (19, 21, 55) and is intended for closing and/or opening the clamp arms (3, 5, 51), wherein the counter arms (19, 21, 55) have a sliding insert (61) in a region in which they make contact with the cam (23).

9. Clamp arm according to Claim 8, wherein the cam (23) is made of plastic, in particular of fibre-reinforced plastic or PEEK, and the sliding insert (61) is made of metal, in particular of V2A steel.

10. Clamp arm according to Claim 5, comprising a rotatable cam (23) which is arranged between the counter arms (19, 21, 55) and is intended for closing and/or opening the clamp arms (3, 5, 51), wherein the cam (23) is made of metal, in particular of V2A steel.

## Revendications

1. Pince pour tenir des récipients, en particulier des bouteilles, dans des machines de transport et de traitement de récipients, comprenant au moins deux branches de pince (3, 5, 51) qui peuvent être déplacées l'une par rapport à l'autre en vue de l'ouverture et de la fermeture, chaque branche de pince (3, 5, 51) présentant un bras de préhension (11, 13, 53), et au moins une branche de pince (3, 5, 51) présentant un contrebras (19, 21, 55), **caractérisée par le fait que** la branche de pince (3, 5, 51) est réalisée d'une seule pièce avec le bras de préhension (11, 13, 53) et le contrebras (19, 21, 55), le bras de préhension (11, 13, 53) étant conçu de manière à être indéformable et le contrebras (19, 21, 55) présentant une élasticité de forme.

2. Pince selon la revendication 1, où le bras de préhension (11, 13, 53), dans le plan de mouvement et parallèlement à la direction de mouvement (29), est prévu au moins si large que, lors de la fermeture de la pince en vue de saisir un récipient de diamètre prédéterminé, ledit bras de préhension (11, 13, 53) reste indéformable, tandis que le contrebras (19, 21, 55) est dimensionné de manière telle que des tolérances des diamètres de récipient, qui peuvent aller jusqu'à 5 mm, en particulier jusqu'à 3 mm, puissent être compensées lors de la fermeture, par déformation du contrebras (19, 21, 55).

3. Pince selon l'une des revendications 1 ou 2, où le module d'élasticité du matériau de la branche de pince (3, 5, 51) se situe dans une plage comprise entre 8 000 MPa et 15 000 MPa, en particulier dans une plage comprise entre 11 000 MPa et 13 000 MPa.

4. Pince selon l'une des revendications 1 à 3, où la branche de pince (3, 5, 51) est réalisée en matière plastique, notamment en matière plastique renforcée de fibres.

5. Pince selon la revendication 4, où la branche de pince (3, 5, 51) est constituée de polyétheréthercétone (PEEK) renforcé de fibres de carbone ou de fibres de verre.

6. Pince selon la revendication 5, où la proportion de fibres de carbone ou de fibres de verre se situe dans une plage comprise entre 10 % et 50 % et est de préférence de 30 %.

7. Pince selon l'une des revendications 1 à 6, où les deux branches de pince (3, 5, 51) présentent un contrebras (19, 21, 55) à élasticité de forme.

8. Branche de pince selon la revendication 7, comprenant une came (23) tournante qui est disposée entre les contrebras (19, 21, 55) et est destinée à fermer et/ou ouvrir les branches de pince (3, 5, 51), les contrebras (19, 21, 55) présentant une garniture de glissement (61) dans une zone de contact avec la came (23).

9. Branche de pince selon la revendication 8, où la came (23) est en matière plastique, notamment en matière plastique ou PEEK renforcé(e) de fibres, et la garniture de glissement (61) est en métal, notamment en acier V2A.

10. Branche de pince selon la revendication 5, comprenant une came (23) tournante qui est disposée entre les contrebras (19, 21, 55) et est destinée à fermer et/ou ouvrir les branches de pince (3, 5, 51), la came (23) étant réalisée en métal, notamment en acier V2A.
